# EUROPÄISCHE PATENTANMELDUNG

(11) **EP 1 544 436 A1**
(43) Veröffentlichungstag der Anmeldung: **22.06.2005**
(21) Anmeldenummer: 03028924.3
(22) Anmeldetag: 17.12.2003
(51) Int. Cl.: F02C 7/08, F01K 23/10, F02C 3/34

(54) **Verfahren zum Betrieb einer Gasturbinenanlage und Gasturbinenanlage**

(71) Anmelder: SIEMENS AKTIENGESELLSCHAFT, 80333 München (DE)
(72) Erfinder: Keissler, Michael, 46147 Oberhausen (DE)

(57) **Zusammenfassung**

Bei einem erfindungsgemäßen Verfahren und einer Gasturbinenanlage (1) ist die Rückführung mindestens eines Teils des Abgases (15) der Gasturbine (5) zu einem der Gasturbine (5) zugeordneten Ansaughaus (10) vorgesehen.

## Beschreibung

Die Erfindung betrifft ein Verfahren zum Betrieb einer Gasturbinenanlage umfassend mindestens eine Gasturbine und ein der Gasturbine zugeordnetes Ansaughaus für Verbrennungsluft sowie eine zur Durchführung des Verfahrens geeignete Gasturbinenanlage.

Beim Betrieb einer Gasturbine einer Gasturbinenanlage entsteht eine größere Menge an Abgas, welches üblicherweise zur Entsorgung einem Abgaskamin der Gasturbinenanlage zugeführt wird.

Die dabei im Abgas enthaltene Wärmeenergie ist somit für eine weitere technische Nutzung verloren.

Bei bekannten Gas- und Dampfkraftanlagen wird das die Gasturbine verlassende Abgas einem Dampferzeuger zugeführt, wobei mittels der im Abgas enthaltenen Wärmeenergie Betriebsdampf für eine Dampfturbine der Dampfkraftanlage erzeugt wird.

Nachteilig bei bekannten Gasturbinenanlagen ist, dass das Abgas eine hohe Schadstoffbelastung aufweist, insbesondere an Stickoxiden und Kohlenmonoxid.

Des Weiteren neigen bekannte Gasturbinenanlagen bei kalten Umgebungsbedingungen zum Vereisen wichtiger Komponenten oder zumindest zu schlechterer Performance, wobei ein Zeichen hierfür ein gasturbinentypisches "Brummen" an kalten Tagen ist.

Der Erfindung liegt daher die Aufgabe zugrunde, ein verbessertes Verfahren zum Betrieb einer Gasturbinenanlage sowie eine verbesserte Gasturbinenanlage anzugeben, mittels welcher insbesondere die beschriebenen Nachteile überwunden werden.

Bezüglich des Verfahrens wird die Aufgabe gelöst durch ein Verfahren zum Betrieb einer Gasturbinenanlage umfassend mindestens eine Gasturbine und ein der Gasturbine zugeordnetes Ansaughaus für Verbrennungsluft, wobei mindestens ein Teil des Abgases der Gasturbine zum Ansaughaus zurückgeführt und dort mit der Verbrennungsluft vermischt wird.

Durch die Rückführung und Beimischung des Abgasteils zur angesaugten Verbrennungsluft im Ansaughaus wird die derart erzeugte, von der Gasturbine angesaugte Ansaugluft erwärmt und gleichzeitig der Sauerstoffgehalt der Ansaugluft, welche als Verbrennungsluftgemisch von der Gasturbine genutzt wird, reduziert.

Dadurch kann der Betriebsbereich der Gasturbine, während welchem der sogenannte Vormischbetrieb möglich ist, hin zu kleineren Leistungsabgaben der Gasturbine vergrößert werden.

Durch das gemäß der Erfindung erwärmte Verbrennungsluftgemisch stellt sich infolge der geringeren Dichte ein kleinerer Massenstrom des Verbrennungsluftgemischs ein, was einem Betrieb der Gasturbine unter scheinbar höherer Umgebungstemperatur entspricht.

Dadurch verschiebt sich die Leistungsabgabe der Gasturbine nach unten, wobei die Turbinenaustrittstemperatur beibehalten wird.

Durch die Beimischung des Teils des Abgases wird der Sauerstoffgehalt des der Gasturbine zugeführten Verbrennungsluftgemischs verringert. Hierbei wird die sogenannte magere Grenze des Vormischbetriebs zu kleineren Leistungen der Gasturbine hin verschoben, was bedeutet, dass im Vergleich zu einer fehlenden Abgasrückführung der Betrieb der Gasturbine mit reduziertem Sauerstoffgehalt im Verbrennungsluftgemisch bei vergleichsweise kleineren Leistungen möglich ist. Hierbei ist die Bildung von Kohlenmonoxid reduziert.

Weiterhin wird das im Abgas vorhandene Kohlenmonoxid durch die wiederholte Teilnahme an der Verbrennung mittels der Abgasrückführung in Kohlendioxid umgewandelt.

Ein weiterer Vorteil des erfindungsgemäßen Verfahrens besteht darin, dass infolge des erhöhten Temperaturniveaus des Verbrennungsluftgemischs ein Einfrieren von Komponenten der Gasturbine an kalten Tagen verhindert wird. Bei bekannten Verfahren wird hierzu häufig Luft aus einem Verdichter entnommen, was zu einem unerwünschten Druckverlust führt.

In einer vorteilhaften Ausgestaltung wird das mit der Verbrennungsluft vermischte Abgas einem Verdichter und anschließend einer Brennkammer der Gasturbine zugeführt.

Da das der Brennkammer der Gasturbine zuzuführende Verbrennungsluftgemisch einen hohen Druck aufweisen muss, ist bei dieser Ausführungsform dafür ein Verdichter vorgesehen. Anzumerken ist hierbei, dass der rückgeführte Teil des Abgases der Gasturbine nicht verdichtet werden muss, sondern dass eine Verdichtung mittels des Verdichters erst nach Vermischung mit der Verbrennungsluft stattfindet.

In einer weiteren bevorzugten Ausführungsform wird das Abgas nach Austritt aus der Gasturbine einem Dampferzeuger zur Erzeugung von Betriebsdampf für eine Dampfturbine zugeführt und danach der mindestens eine Teil des Abgases zum Ansaughaus zurückgeführt.

Hierbei wird das die Gasturbine verlassende Abgas zunächst zur Erzeugung von Betriebsdampf für eine Dampfturbine ausgenutzt (Gas- und Dampfkraftanlage) und danach zumindest teilweise zum Ansaughaus zurückgeführt.

Die im Abgas vorhandene Wärmeenergie wird daher zunächst möglichst weitgehend zur Dampferzeugung und erst danach zur Erwärmung der Verbrennungsluft genutzt.

In einer anderen Ausführungsform wird ein weiterer Teil des Abgases einem Dampferzeuger zur Erzeugung von Betriebsdampf für eine Dampfturbine zugeführt.

Im Unterschied zur vorangehenden Ausführungsform wird hierbei das Abgas nach Verlassen der Gasturbine aufgespalten in den Teil, welcher zum Ansaughaus zurückgeführt wird und in den weiteren Teil, welcher zur Erzeugung von Betriebsdampf für die Dampfturbine genutzt wird.

Diese Ausführungsform eignet sich beispielsweise dann, wenn der angekoppelte Dampfprozess keine großen Dampfleistungen erfordert und der Erwärmung der Verbrennungsluft Priorität eingeräumt wird.

Vorteilhaft wird ein anderer Teil des Abgases einem der Gasturbine zugeordneten Abgaskamin zugeführt.

In den meisten Fällen bleibt zumindest ein Anteil des Abgases der Gasturbine übrig, welcher keiner weiteren Nutzung zugeführt werden kann. Für diesen Anteil ist bei dieser Ausführungsform ein Abgaskamin zur Entsorgung dieses Anteils vorgesehen. Der Abgaskamin kann dabei Mittel zur Reinigung des darin eingeleiteten Abgases umfassen.

Die Erfindung führt weiterhin zu einer Gasturbinenanlage umfassend mindestens eine Gasturbine und ein der Gasturbine zugeordnetes Ansaughaus für Verbrennungsluft, wobei die Gasturbinenanlage mindestens eine Abgasleitung umfasst, mittels welcher mindestens ein Teil des Abgases der Gasturbine zum Ansaughaus rückführbar ist.

Bevorzugt umfasst die Gasturbinenanlage einen Dampferzeuger, in welchen ein weiterer Teil des Abgases zur Erzeugung von Betriebsdampf für eine Dampfturbine einleitbar ist, wobei die Abgasleitung in Strömungsrichtung des Abgases vor dem Dampferzeuger angeordnet ist.

In einer anderen Ausführungsform umfasst die Gasturbinenanlage einen Dampferzeuger, in welchen das Abgas einleitbar ist, wobei die Abgasleitung in Strömungsrichtung des Abgases nach dem Dampferzeuger angeordnet ist.

Im Folgenden wird ein Ausführungsbeispiel der Erfindung näher dargestellt.

### Es zeigt:

FIG eine erfindungsgemäße Gasturbinenanlage.

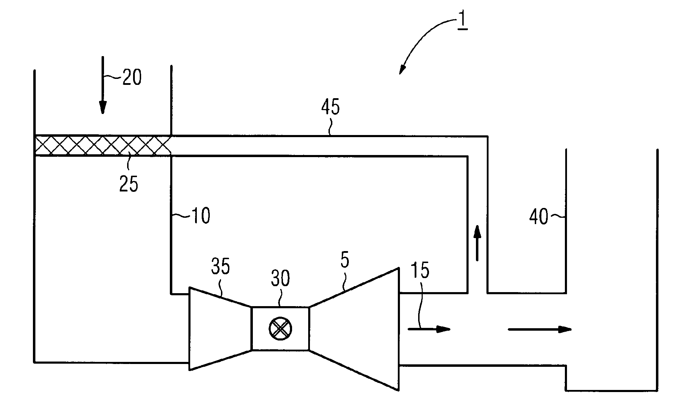

In der Figur ist eine erfindungsgemäße Gasturbinenanlage 1 dargestellt, welche eine Gasturbine 5 und ein der Gasturbine 5 zugeordnetes Ansaughaus 10 umfasst.

Abgas 15 aus der Gasturbine 5 wird dabei mindestens teilweise über eine Abgasleitung 45 zurück zum Ansaughaus 10 geführt.

Dort findet eine Vermischung mit angesaugter Verbrennungsluft 20 mittels eines Mischers 25 statt.

Das derartig erzeugte Verbrennungsluftgemisch weist eine im Vergleich zur Verbrennungsluft 20 höhere Temperatur sowie einen reduzierten Sauerstoffgehalt auf.

Das Verbrennungsluftgemisch wird einem Verdichter 35 zugeführt, um den für eine Verbrennung in einer Brennkammer 30 erforderlichen hohen Druck zu erzeugen.

Derjenige Anteil des Abgases 15, welcher nicht mittels der Abgasleitung 45 zum Ansaughaus 10 zurückgeführt ist, wird einem Abgaskamin 40 zugeführt.

Im vorliegenden Ausführungsbeispiel ist bevorzugt ein nicht näher dargestellter Dampferzeuger vorgesehen, welcher entweder unmittelbar nach der Gasturbine angeordnet ist, so dass die Abgasleitung 45 in Strömungsrichtung des Abgases 15 nach dem Dampferzeuger angeordnet ist oder welcher in Strömungsrichtung des Abgases 15 nach der abzweigenden Abgasleitung 45 angeordnet ist, so dass im letztgenannten Fall der nicht rückgeführte Teil des Abgases 15 zur Erzeugung von Betriebsdampf für eine Dampfturbine genutzt werden kann.

## Patentansprüche

1. Verfahren zum Betrieb einer Gasturbinenanlage (1) umfassend mindestens eine Gasturbine (5) und ein der Gasturbine (5) zugeordnetes Ansaughaus (10) für Verbrennungsluft (20),
**dadurch gekennzeichnet, dass**
mindestens ein Teil des Abgases (15) der Gasturbine (5) zum Ansaughaus (10) zurückgeführt und dort mit der Verbrennungsluft (20) vermischt wird.

2. Verfahren nach Anspruch 1,
**dadurch gekennzeichnet, dass**
das mit der Verbrennungsluft (20) vermischte Abgas (15) einem Verdichter (35) und anschließend einer Brennkammer (30) der Gasturbine (5) zugeführt wird.

3. Verfahren nach einem der Ansprüche 1 oder 2,
**dadurch gekennzeichnet, dass**
das Abgas (15) nach Austritt aus der Gasturbine (5) einem Dampferzeuger zur Erzeugung von Betriebsdampf für eine Dampfturbine zugeführt und danach der mindestens eine Teil des Abgases (15) zum Ansaughaus (10) zurück geführt wird.

4. Verfahren nach einem der Ansprüche 1 oder 2,
**dadurch gekennzeichnet, dass**
ein weiterer Teil des Abgases (15) einem Dampferzeuger zur Erzeugung von Betriebsdampf für eine Dampfturbine zugeführt wird.

5. Verfahren nach einem der Ansprüche 1 bis 4,
**dadurch gekennzeichnet, dass**
ein anderer Teil des Abgases (15) einem der Gasturbine (5) zugeordneten Abgaskamin (40) zugeführt wird.

6. Gasturbinenanlage (1) umfassend mindestens eine Gasturbine (5) und ein der Gasturbine (5) zugeordnetes Ansaughaus (10) für Verbrennungsluft (20),
**gekennzeichnet durch**
mindestens eine Abgasleitung (45), mittels welcher mindestens ein Teil des Abgases (15) der Gasturbine (5) zum Ansaughaus (10) rückführbar ist.

7. Gasturbinenanlage (1) nach Anspruch 6,
**gekennzeichnet durch**
einen Dampferzeuger, in welchen ein weiterer Teil des Abgases (10) zur Erzeugung von Betriebsdampf für eine Dampfturbine einleitbar ist, wobei die Abgasleitung (45) in Strömungsrichtung des Abgases (15) vor dem Dampferzeuger angeordnet ist.

8. Gasturbinenanlage (1) nach Anspruch 6,
**gekennzeichnet durch**
einen Dampferzeuger, in welchen das Abgas (15) einleitbar ist, wobei die Abgasleitung (45) in Strömungsrichtung des Abgases (15) nach dem Dampferzeuger angeordnet ist.
